**Europäisches Patentamt**

**European Patent Office**

**Office européen des brevets**

(19)

(11) Veröffentlichungsnummer : **0 031 507**
**B1**

(12) # EUROPÄISCHE PATENTSCHRIFT

(45) Veröffentlichungstag der Patentschrift :
22.09.82

(51) Int. Cl.³ : **C 01 G 23/00**

(21) Anmeldenummer : **80107701.7**

(22) Anmeldetag : **06.12.80**

(54) **Verfahren zur Herstellung einer hydrolysierbaren Titanylsulfatlösung.**

(30) Priorität : **21.12.79 DE 2951799**

(43) Veröffentlichungstag der Anmeldung :
**08.07.81 (Patentblatt 81/27)**

(45) Bekanntmachung des Hinweises auf die Patenterteilung : **22.09.82 Patentblatt 82/38**

(84) Benannte Vertragsstaaten :
**DE FR GB IT**

(56) Entgegenhaltungen :
**DE B 1 052 378**
**DE B 2 015 155**
**DE C 952 711**
**GB A 741 757**
**US A 2 631 924**

(73) Patentinhaber : **BAYER AG**
**Zentralbereich Patente, Marken und Lizenzen**
**D-5090 Leverkusen 1, Bayerwerk (DE)**

(72) Erfinder : **Panek, Peter, Dr.**
**Bodelschwinghstrasse 12**
**D-4150 Krefeld 1 (DE)**
Erfinder : **Gutsche, Walter, Dr.**
**Johannes-Heynen-Strasse 16**
**D-4150 Krefeld 1 (DE)**
Erfinder : **Woditsch, Peter, Dr.**
**Deswatinesstrasse 83**
**D-4150 Krefeld 1 (DE)**

Imprimerie Jouve, 18, rue St-Denis, 75001 Paris, France

Verfahren zur Herstellung einer hydrolysierbaren Titanylsulfatlösung

Die Erfindung betrifft ein Verfahren zur Herstellung einer zur Verarbeitung zu Titandioxidpigmenten geeigneten, hydrolysierbaren Titanylsulfatlösung durch gemeinsamen Aufschluß von $TiO_2$- und Ti(III)-reicher Schlacke und Ilmenit mit Schwefelsäure eines $H_2SO_4$-Gehaltes größer 86 %, wobei vorzugsweise die Schwefelsäure als Oleum und vorkonzentrierte rückgeführte Aufschlußsäure eingesetzt wird, und Lösen der verfestigten Reaktionsmasse in einem wäßrigen Lösungsmittel.

Der gemeinsame Aufschluß titanhaltiger Schlacken und verschiedenster Ilmenite mit konzentrierter Schwefelsäure ist schon mehrfach beschrieben worden.

So wird in der GB-A 741 757 der gemeinsame Aufschluß einer Mischung aus 10 bis 80 Gew. -Teilen eines eisentitanhaltigen Erzes und 90 bis 20 Gew.-Teilen einer reduzierten titanhaltigen Schlacke bei erhöhten Temperaturen mit konzentrierter Schwefelsäure beansprucht. Beispielhaft angeführt sind Aufschlüsse eines allein zu 92 % aufschließbaren primären Ilmenits mit allein nur zu 80 bzw. 66,5 % aufschließbaren Schlacken.

Die US-A 2 631 924 beschreibt den gemeinsamen Aufschluß einer fein gemahlenen Mischung aus 35 bis 65 Gew.-Teilen eines Ilmenits mit einem $TiO_2$-Gehalt bis 60 % und einem Fe(III)-Gehalt > 50 % des Gesamteisengehaltes und 65 bis 35 Gew.-Teilen einer Schlacke mit einem $TiO_2$-Gehalt von 60 bis 80 %, wobei 10 bis 20 % des $TiO_2$-Gehaltes in reduzierter Form (als $Ti_2O_3$) vorliegen, in konzentrierter Schwefelsäure.

Aufschlüsse nach beiden Verfahren führen nach eigenen Untersuchungen insbesondere bei gemeinsamem Aufschluß mit steigenden Gewichtsteilen Ilmenit zu stark schwankenden Ausbeuten an löslichem Titansulfat. Es ist danach verständlich, wenn sich die DE-B 1 052 378 in ihrem Verfahren zur Herstellung hydrolysierbarer Titanylsulfatlösungen durch Umsetzen feinteiliger Gemische aus Ilmenit und geschmolzener titanhaltiger Schlacke mit konzentrierter Schwefelsäure und Lösen der verfestigten Reaktionsmasse in einem wäßrigen Lösungsmittel auf solche Ilmenit-Schlacken-Gemische richtet, die nur 10 bis 20 % Ilmenit enthalten.

Insbesondere aus wirtschaftlichen Gründen ist es aber wünschenswert, hohe Ilmenitanteile gemeinsam mit titanhaltigen Schlacken aufzuschließen, ohne gleichzeitig eine erniedrigte Ausbeute an löslichem Titanylsulfat hinnehmen zu müssen. Bei Versuchen mit verschiedenen Schlacken und Ilmeniten wurde überraschenderweise gefunden, daß die Aufschlußausbeute solcher Ilmenit-Schlacke-Gemische wesentlich von dem Ti(III)-Gehalt der Gesamtmischungen abhängt. Es zeigt sich, daß dann besonders große Ilmenitanteile bei guter Aufschlußausbeute gemeinsam mit titanhaltigen Schlacken aufgeschlossen werden können, wenn erfindungsgemäß Schlacke, die einen Ti-Gehalt > 80 %, berechnet als $TiO_2$, und darin eingeschlossen einen Ti(III)-Gehalt von 22 bis 40 %, vorzugsweise von 25 bis 35 %, berechnet als $TiO_2$ und bezogen auf Schlacke, und ein Ilmenit, der ein Fe(III)- zu Fe(II)-Verhältnis von 1 : 1 bis 10 : 1 aufweist, in einem solchen Verhältnis gemeinsam mit Schwefelsäure zur Umsetzung gebracht werden, daß das Molverhältnis von Ti(III) zu Fe(III) in der Mischung von 25 : 1 bis 1,4 : 1, vorzugsweise von 3,6 : 1 bis 1,5 : 1, beträgt.

Auch der Aufschluß titanhaltiger Rohstoffe mit Gemischen aus Oleum und rückgeführter vorkonzentrierter Schwefelsäure ist schon mehrfach beschrieben worden.

Die bekannten Verfahren nutzen in der Regel die bei der Zusammenführung einer verdünnten und einer konzentrierten Schwefelsäure auftretende Verdünnungswärme zum Starten der Aufschlußreaktion eines titanhaltigen Rohstoffes mit diesem Säuregemisch. Die Konzentration der dabei verwendeten rückgeführten vorkonzentrierten Dünnsäuren wird somit relativ niedrig gewählt, damit die beim Mischen mit der konzentrierten Säure auftretende Verdünnungswärme groß genug ist, um ohne weitere Energiezufuhr die Aufschlußreaktion des Säuregemisches mit dem Erz innerhalb einer gewissen Zeitspanne folgen zu lassen.

Es ist ferner bekannt, daß es beim Aufschluß von Schlacke mit Oleum und aus diesem Prozeß zurückgeführter vorkonzentrierter Dünnsäure leicht zu einer unerwünscht starken Anreicherung von Schwermetallspuren, wie Chrom und Vanadin, kommt. Diese verbleiben bei der nachfolgenden Hydrolyse partiell bei dem erhaltenen Titandioxid-Hydrolysat und führen nach der Kalzination zu unerwünschten Farbtonbeeinflussungen der Pigmente.

Überraschenderweise konnte nun festgestellt werden, daß diese Anreicherung von Schwermetallspuren beim gemeinsamen erfindungsgemäßen Aufschluß von Ilmenit und Schlacke mit Schwefelsäure oder Oleum und aus diesem Prozeß zurückgeführter vorkonzentrierter Dünnsäure in der aus dem Aufschlußgut nach Lösen in einem wäßrigen Lösungsmittel und Klärung erhaltenen hydrolysierbaren Titanylsulfatlösung dann unterbleibt oder soweit unterdrückt wird, daß keine schädlichen Wirkungen mehr an den daraus erhaltenen Pigmenten feststellbar sind, wenn aus diesem Prozeß rückgeführte vorkonzentrierte Dünnsäure zum Einsatz kommt, die auf eine $H_2SO_4$-Konzentration von 60 bis 75 %, vorzugsweise von 63 bis 71 %, vorkonzentriert wurde. Dabei reicht die beim Verschnitt dieser Dünnsäure mit Oleum erhaltene Verdünnungswärme aus, um ohne weitere Energiezufuhr die Aufschlußreaktion des Säuregemisches mit dem erfindungsgemäßen Ilmenit-Schlacke-Gemisch ablaufen zu lassen.

Die vorliegende Erfindung betrifft ein Verfahren zur Herstellung einer hydrolysierbaren Titanylsulfatlösung durch den gemeinsamen Aufschluß von Ilmenit und Schlacke mit Schwefelsäure und Lösen der verfestigten Reaktionsmasse in einem wäßrigen Lösungsmittel, wobei eine feinteilige Schlacke, die einen Ti-Gehalt > 80 %, berechnet als $TiO_2$, und darin eingeschlossen einen Ti(III)-Gehalt von 22 bis 40 %, vorzugsweise von 25 bis 35 %, berechnet als $TiO_2$ und bezogen auf Schlacke, enthält, und ein feinteiliger Ilmenit, der ein Fe(III)- zu Fe(II)-Verhältnis von 1 : 1 bis 10 : 1 aufweist, so gemischt werden, daß das Molverhältnis von Ti(III) zu Fe(III) in der Mischung von 25 : 1 bis 1,4 : 1, vorzugsweise von 3,6 : 1 bis 1,5 : 1 beträgt, die Mischung zur Einstellung des Verhältnisses $H_2SO_4$ zu $TiO_2$ von 1,7 : 1 bis 2,2 : 1 mit Schwefelsäure einer $H_2SO_2$-Konzentration von größer 86 % versetzt und die Aufschlußreaktion durch Zugabe von soviel Wasser, verdünnter Schwefelsäure oder Wasserdampft gestartet wird, daß die $H_2SO_4$-Konzentration danach bei 86 bis 96 % liegt. Eine weitere Ausführungsform des erfindungsgemäßen Verfahrens besteht darin, daß die Schlacke zunächst mit Oleum bzw. vorkonzentrierter Dünnsäure gemischt und danach mit einer Mischung des Ilmenits in vorkonzentrierter Dünnsäure bzw. Oleum versetzt wird. Eine bevorzugte Ausführungsform des erfindungsgemäßen Verfahrens besteht darin, daß die Schlacke und der Ilmenit gemeinsam aufgemahlen und mit Oleum bzw. vorkonzentrierter Dünnsäure versetzt werden, die Aufschlußreaktion mit vorkonzentrierter Dünnsäure bzw. Oleum gestartet wird. Eine weitere bevorzugte Ausführungsform des Verfahrens besteht darin, daß Oleum eines $SO_3$-Gehaltes bis 30 % und rückgeführte, vorkonzentrierte Dünnsäure der $H_2SO_4$-Konzentration von 60 bis 75 %, vorzugsweise von 63 bis 71 %, zum Einsatz kommen.

Das erfindungsgemäße Verfahren arbeitet nicht nur besonders wirtschaftlich, sondern bietet darüber hinaus sowohl gegenüber der Herstellung einer hydrolysierbaren Titanylsulfatlösung aus jeweils nur einem der Rohstoffe als auch gegenüber dem getrennten Aufschluß der beiden Rohstoffe und der späteren Vereinigung der beiden Lösungen bedeutende verfahrenstechnische Vorteile.

Beim alleinigen Schwefelsäureaufschluß von Schlacke wirkt deren Ti(III)-Gehalt als Reduktionsmittel auf die Schwefelsäure. Damit geht ein Teil der Schwefelsäure als Schwefeldioxid oder als Schwefelwasserstoff verloren und muß aus der Abluft entfernt werden. Darüber hinaus kann die resultierende Aufschlußlösung beträchtliche Mengen Ti(III) enthalten. Damit ist sie für die nachfolgende Hydrolyse nur schlecht geeignet, da das in der Lösung vorhandene Ti(III) erst oxidiert werden muß, um mit hoher Ausbeute hydrolysiert werden zu können. Andererseits führt der alleinige Aufschluß von $Fe_2O_3$-haltigen Ilmeniten mit Schwefelsäure zu Lösungen, die vor der Hydrolyse erst mit einer großen Eisenschrott versetzt werden müssen, um die vorhandenen Fe(III)- zu Fe(II)-Ionen zu reduzieren. Dabei wird zusätzliche Schwefelsäure verbraucht und der Gesamteisengehalt der Lösungen soweit ansteigen, daß sie nicht direkt zur Hydrolyse einsetzbar sind. Sie müssen vielmehr erst gekühlt werden, um das Eisen in Form von $FeSO_4.7H_2O$ abzuscheiden. Demgegenüber reagiert nach dem erfindungsgemäßen Verfahren das Ti(III) der Schlacke bevorzugt mit dem Fe(III) des Ilmenits, so daß auf eine zusätzliche Fe(III)-Reduktion, eine zusätzliche Ti(III)-Oxidation und eine Eisenabtrennung verzichtet werden kann, ein zusätzlicher Schwefelsäureverbrauch entfällt. Weiterhin bietet das erfindungsgemäße Verfahren gegenüber dem getrennten Aufschluß einer $TiO_2$- und Ti(III)-haltigen Schlacke und eines Ilmenits und dem späteren Zusammengeben der einzelnen Lösungen in einem solchen Verhältnis, daß alles Eisen der Ilmenitlösung durch das noch vorhandene Ti(III) der Schlackelösung zu Fe(II) reduziert wird, den Vorteil, daß deutlich größere Ilmenitanteile verarbeitet werden können.

Schließlich arbeitet der erfindungsgemäß Prozeß umweltfreundlich, da er eine sinnvolle Rückführung der aus ihm erhaltenen vorkonzentrierten Dünnsäure in einem einfachen Arbeitsschritt erlaubt. Dies ist insbesondere hinsichtlich der Mitverarbeitung beträchtlicher Ilmenitanteile bedeutungsvoll.

Das erfindungsgemäße Verfahren gestattet es, in einem besonders wirtschaftlichen, technisch einfach auszuführenden Arbeitsschritt die Verarbeitung von $TiO_2$- und Ti(III)-haltiger Schlacke zusammen mit bis zu ca. 45 % Ilmenit unter Rückführung erheblicher Teile vorkonzentrierter Dünnsäure ohne Verluste der Aufschlußausbeute, und ohne daß es zu einer nachteiligen Anreicherung der überwiegend aus der verwendeten Schlakke stammenden Schwermetallspuren, wie Chrom oder Vanadin, in der Aufschlußlösung kommt. Man erhält somit nach dem Lösen der Reaktionsmasse in einem wäßrigen Lösungsmittel und einem Klärungsschritt eine unmittelbar zur Verarbeitung auf Titandioxidpigmente geeignete, hydrolysierbare Titanylsulfatlösung, ohne zusätzlichen Reduktionsschritt zur Minderung des in dem Ilmenit vorhandenen Fe(III)-Gehaltes und ohne zusätzlichen Oxidationsschritt zur Minderung des in der Schlacke vorhandenen Ti(III)-Gehaltes. Weiterhin werden Schwefelsäureverluste durch die Reaktion des Ti(III) mit der Schwefelsäure sowie durch die Reaktion mit Eisenschrott zur Reduktion des im Ilmenit enthaltenen Fe(III)-Gehaltes vermieden. Schließlich wird das Reduktionspotential der Schlacke weitgehend quantitativ zur Umsetzung mit dem Fe(III)-Gehalt des Ilmenits genutzt, so daß Titanylsulfatlösungen erhalten werden, deren Gesamteisengehalt so niedrig liegt, daß auf eine Abscheidung von z.B. $FeSO_4.7H_2O$ verzichtet werden kann.

Nachfolgend wird das erfindungsgemäße Verfahren beispielhaft erläutert. Sofern nichts anderes angegeben wird, bedeuten die %-Angaben Gewichts-%.

## Beispiel 1

In einem mit einem Thermometer und einem Rührer versehenen und zur Kompensation der Wärmeabstrahlung in einem der Innentemperatur des Aufschlußgefäßes nachführbaren Luftbad befindlichen 500 ml Glasgefäß wurden 239,4 g 96 %ige Schwefelsäure vorgelegt. 95,1 g auf eine Korngröße von 68,5 % > 40 μm aufgemahlene Schlacke, die einen Ti-Gehalt von 85,1 %, berechnet als $TiO_2$, und darin eingeschlossen einen Ti(III)-Gehalt von 30,2 % (berechnet als $TiO_2$ und bezogen auf Schlacke) und einen Fe-Gehalt von 9,5 % besaß, sowie 31,7 g auf eine Korngröße von 92,9 % > 40 μm aufgemahlener Ilmenit, der einen $TiO_2$-Gehalt von 60,2 %, einen Fe-Gehalt von 25,0 % und ein Fe(III) zu Fe(II)-Verhältnis von 2,29 : 1 besaß, eingetragen und unter intensivem Rühren bei 40 °C mit 16,3 g Wasser zum Starten der Aufschlußreaktion versetzt. In der Mischung lagen somit 100 g $TiO_2$ vor, betrug das Molverhältnis von Ti(III) zu Fe(III) 3,6 : 1, und das Verhältnis $H_2SO_4$ zu $TiO_2$ 2 : 1 und die $H_2SO_4$-Endkonzentration 89,9 %. Es wurden 75 Teile Schlacke zu 25 Teilen Ilmenit eingesetzt. Nach Beendigung der Wasserzugabe wurde in 33 Minuten bei exothermer Reaktion die maximale Reaktionstemperatur von 203 °C erreicht. Danach wurde die verfestigte Reaktionsmasse 4 Stunden gealtert, wobei die Temperatur auf 180 °C abfiel und schließlich durch Zugabe von 350 ml Wasser in 4 Stunden bei 70 °C gelöst. Es befand sich 97,6 % des eingesetzten $TiO_2$ in Lösung und 6,9 % des gelösten $TiO_2$ lagen als Ti(III) vor.

## Beispiel 2

In der in Beispiel 1 beschriebenen Apparatur wurden 249,2 g 96 %ige Schwefelsäure vorgelegt, 74,4 g der auf eine Korngröße von 68,5 % > 40 μm aufgemahlenen und schon in Beispiel 1 eingesetzten Schlacke sowie 60,9 g des auf eine Korngröße von 92,9 > 40 μm aufgemahlenen und schon in Beispiel 1 eingesetzten Ilmenits (60,2 % $TiO_2$ ; 25 % Fe ; Fe(III) : Fe(II) = 2,29 : 1) eingetragen und unter intensivem Rühren mit 16,9 g Wasser bei 40 °C zum Starten der Aufschlußreaktion versetzt. In der Mischung lagen somit 100 g $TiO_2$ vor, betrug das Molverhältnis von Ti(III) zu Fe(III) 1,48 : 1, das Verhältnis $H_2SO_4$ zu $TiO_2$ 2 : 1 und die $H_2SO_4$-Endkonzentration 89,9 %. Es wurden 55 Teile Schlacke zu 45 Teilen Ilmenit eingesetzt. Nach Ende der Wasserzugabe wurde in 27 Minuten bei exothermer Reaktion die maximale Reaktionstemperatur von 201 °C erreicht. Danach wurde die verfestigte Reaktionsmasse wie in Beispiel 1 4 Stunden gealtert, wobei die Temperatur auf 178 °C abfiel und schließlich durch Zugabe von 350 ml Wasser in 4 Stunden bei 70 °C gelöst. Es befanden sich 98,0 % des eingesetzten $TiO_2$ in Lösung. In der Lösung konnte kein Ti(III) nachgewiesen werden, aber ein geringer Fe(III)-Gehalt entsprechend einem Verhältnis Fe(III) zu Fe(II) von 0,05 : 1.

## Vergleichsbeispiel VA

In der in Beispiel 1 beschriebenen Apparatur wurden 254,5 g 96 %ige Schwefelsäure vorgelegt, 63,0 g der in den vorgenannten Beispielen beschriebenen und vorbereiteten Schlacke sowie 77,0 g des in den vorgenannten Beispielen beschriebenen und vorbereiteten Ilmenits eingetragen und unter intensivem Rühren mit 17,3 g Wasser bei 40 °C zum Starten der Aufschlußreaktion versetzt. In der Mischung lagen somit 100 g $TiO_2$ vor, betrug das Molverhältnis von Ti(III) zu Fe(III) 0,99 : 1, das Verhältnis $H_2SO_4$ zu $TiO_2$ 2 : 1 und die $H_2SO_4$-Endkonzentration 89,9 %. Somit wurden bei diesem Vergleichsbeispiel, das außerhalb des Rahmens des erfindungsgemäßen Verfahrens liegt, 45 Teile Schlacke zu 55 Teilen Ilmenit eingesetzt. Nach Ende des Wasserzusatzes wurde in 26 Minuten bei exothermer Reaktion die maximale Reaktionstemperatur von 199 °C erreicht. Danach wurde die verfestigte Reaktionsmasse wie in den vorgenannten Beispielen gealtert und gelöst. Es befanden sich 71,8 % des eingesetzten $TiO_2$ in der Lösung.

## Beispiel 3

In der in Beispiel 1 beschriebenen Apparatur wurden 159,6 g Oleum mit einem $SO_3$-Gehalt von 27,2 % vorgelegt, 79,9 g der in den vorgenannten Beispielen beschriebenen und vorbereiteten Schlacke sowie 53,3 g des in den vorgenannten Beispielen beschriebenen nund vorbereiteten Ilmenits eingetragen und unter intensivem Rühren bei 40 °C zum Starten der Aufschlußreaktion 103,3 g einer rückgeführten und auf einen $H_2SO_4$-Gehalt von 65,1 % vorkonzentrierten Dünnsäure zugesetzt. In der Mischung lagen somit 100 g $TiO_2$ vor, betrug das Molverhältnis von Ti(III) zu Fe(III) 1,81 : 1, das Verhältnis $H_2SO_4$ zu $TiO_2$ 2 : 1 und die $H_2SO_4$-Endkonzentration 90,0 %. Es wurden 60 Teile Schlacke zu 40 Teilen Ilmenit eingesetzt. Nach Ende der Zugabe der zurückgeführten, vorkonzentrierten Dünnsäure wurde in 27 Minuten bei exothermer Reaktion die maximale Reaktionstemperatur von 194 °C erreicht. Danach wurde die verfestigte Reaktionsmasse wie in den vorgenannten Beispielen gealtert und gelöst. Es befanden sich 97,8 % des eingesetzten $TiO_2$ in Lösung und 4 % des gelösten $TiO_2$ lagen als Ti(III) vor.

## Vergleichsbeispiel VB

In einem Vergleichsbeispiel wurde das Aufschlußverhalten der in Beispiel 1 eingesetzten und beschriebenen Schlacke untersucht. Dazu wurden in einem mit einem Thermometer und einem Tauchrohr zur Einleitung von Luft versehenen und zur Kompensation der Wärmebestrahlung in einem der Innentemperatur des Aufschlußgefäßes nachführbaren Luftbad befindlichen 10 l Glasgefäß mit kegelförmigen Boden 3 894 g 96 %ige Schwefelsäure und 2 000 g der in den vorgenannten Beispielen beschriebenen und vorbereiteten Schlacke miteinander gemischt und unter Durchleiten von Luft bei 70 °C mit 265 ml Wasser zum Starten der Aufschlußreaktion versetzt.

In der Mischung lagen 1 072 g $TiO_2$ vor, betrug das Verhältnis von $H_2SO_4$ zu $TiO_2$ 2 : 1 und die $H_2SO_4$-Endkonzentration 89,9 %. Nach der Wasserzugabe wurde in 32 Minuten bei exothermer Reaktion die maximale Reaktionstemperatur von 204 °C erreicht. Danach wurde die verfestigte Reaktionsmasse wie in den vorgenannten Beispielen gealtert und durch Zugabe von 6 l Wasser in 5 Stunden bei 70 °C gelöst. Es befanden sich 96,7 % des eingesetzten $TiO_2$ in der Lösung und 14,5 % des gelösten $TiO_2$ lagen als Ti(III) vor.

Vergleichsbeispiel VC

In diesem weiteren Vergleichsbeispiel wurde das Aufschlußverhalten des in Beispiel 1 eingesetzten und beschriebenen Ilmenits untersucht. Dazu wurden in der in Beispiel 5 beschriebenen Apparatur 3 424 g 96 %ige Schwefelsäure und 2 000 g des in den Beispielen 1 und 2 beschriebenen und vorbereiteten Ilmenits miteinander gemischt und unter Durchleiten von Luft bei 40 °C mit 186 ml Wasser zum Starten der Aufschlußreaktion versetzt. In der Mischung lagen 1 204 g $TiO_2$ vor, das Verhältnis von $H_2SO_4$ zu $TiO_2$ betrug 2 : 1 und die $H_2SO_4$-Endkonzentration 91,0 %.

Nach der Wasserzugabe wurde in 33 Minuten bei exothermer Reaktion die maximale Reaktionstemperatur von 205 °C erreicht. Die feste Aufschlußmasse wurde einem Alterungsprozeß von 3 Stunden unterworfen, wobei die Temperatur auf 180 °C absank. Danach wurden 6 l Wasser zugesetzt und 5 Stunden bei 70 °C gelöst. Es befanden sich 92,5 % des eingesetzten $TiO_2$ in Lösung. Von dem eingesetzten Eisen befanden sich 97,6 % in Lösung mit einem Fe(III) zu Fe(II)-Verhältnis von 2,77 : 1.

**Ansprüche**

1. Verfahren zur Herstellung einer hydrolysierbaren Titanylsulfatlösung durch den gemeinsamen Aufschluß von Ilmenit und Schlacke mit Schwefelsäure und Lösen der verfestigten Reaktionsmasse in einem wäßrigen Lösungsmittel, dadurch gekennzeichnet, daß eine feinteilige Schlacke, die einen Ti-Gehalt > 80 %, berechnet als $TiO_2$, und darin eingeschlossen einen Ti(III)-Gehalt von 22 bis 40 %, vorzugsweise von 25 bis 35 %, berechnet als $TiO_2$ und bezogen auf Schlacke, enthält, und ein feinteiliger Ilmenit, der ein Fe(III)- zu Fe(II)-Verhältnis von 1 : 1 bis 10 : 1 aufweist, so gemischt werden, daß das Molverhältnis von Ti(III) zu Fe(III) in der Mischung von 25 : 1 bis 1,4 : 1, vorzugsweise von 3,6 : 1 bis 1,5 : 1, beträgt, die Mischung zur Einstellung des Verhältnisses $H_2SO_4$ zu $TiO_2$ von 1,7 : 1 bis 2,2 : 1 mit Schwefelsäure einer $H_2SO_4$-Konzentration von größer 86 % versetzt und die Aufschlußreaktion durch Zugabe von soviel Wasser, verdünnter Schwefelsäure oder Wasserdampf gestartet wird, daß die $H_2SO_4$-Konzentration danach bei 86 bis 96 % liegt.

2. Verfahren nach Anspruch 1, dadurch gekennzeichnet, daß die Schlacke zunächst mit Oleum bzw. vorkonzentrierter Dünnsäure gemischt und danach mit einer Mischung des Ilmenits in vorkonzentrierter Dünnsäure bzw. Oleum versetzt wird.

3. Verfahren nach einem der Ansprüche 1 oder 2, dadurch gekennzeichnet, daß die Schlacke und der Ilmenit gemeinsam aufgemahlen und mit Oleum bzw. vorkonzentrierter Dünnsäure versetzt werden, die Aufschlußreaktion mit vorkonzentrierter Dünnsäure bzw. Oleum gestartet wird.

4. Verfahren nach einem der Ansprüche 2 oder 3, dadurch gekennzeichnet, daß Oleum eines $SO_3$-Gehaltes bis 30 % und rückgeführte vorkonzentrierte Dünnsäure der $H_2SO_4$-Konzentration von 60 bis 75 %, vorzugsweise von 63 bis 71 %, zum Einsatz kommen.

**Claims**

1. Process for the production of a hydrolysable titanyl sulphate solution by the joint digestion of ilmenite and slag with sulphuric acid and dissolving the solidified reaction mass in an aqueous solvent, characterised in that a finely divided slag which has a Ti content of > 80 %, calculated as $TiO_2$, and included therein a Ti(III) content of 22 to 40 %, preferably 25 to 35 %, calculated as $TiO_2$ and based on the slag, and a finely divided ilmenite, which has a Fe(III) to Fe(II) ratio of 1 : 1 to 10 : 1, are mixed in such a way that the molar ratio of Ti(III) to Fe(III) in the mixture is 25 : 1 to 1.4 : 1, preferably 3.6 : 1 to 1.5 : 1, sulphuric acid with an $H_2SO_4$ concentration of higher than 86 % is added to the mixture to adjust the ratio of $H_2SO_4$ to $TiO_2$ to 1.7 : 1 to 2.2 : 1 and the digestion reaction is started by adding sufficient water, dilute sulphuric acid or water vapour such that the $H_2SO_4$ concentration is subsequently 86 to 96 %.

2. Process according to Claim 1, characterised in that the slag is initially mixed with oleum or pre-concentrated dilute acid and is then mixed with a mixture of the ilmenite in pre-concentrated dilute acid or oleum.

3. Process according to one of Claims 1 or 2, characterised in that the slag and the ilmenite are ground together and mixed with oleum or pre-concentrated dilute acid and the digestion reaction is started using pre-concentrated dilute acid or oleum.

4. Process according to one of Claims 2 or 3, characterised in that oleum having an $SO_3$ content of up to 30 % and recycled, pre-concentrated dilute acid having an $H_2SO_4$ concentration of 60 to 75 %, preferably 63 to 71 %, are used.

**Revendications**

1. Procédé pour la préparation d'une solution hydrolysable de sulfate de titanyle par l'attaque conjointe d'ilménite et de scorie par l'acide sulfurique et dissolution de la masse réactionnelle solidifiée dans un solvant aqueux, caractérisé en ce qu'on mélange une scorie en fines particules qui a une teneur en Ti > 80 % calculée en $TiO_2$, y compris une teneur en Ti(III) de 22 à 40 %, de préférence de 25 à 35 %, calculée en $TiO_2$, et rapportée à la scorie, et une ilménite en fines particules qui présente un rapport Fe(III)/Fe(II) de 1 : 1 à 10 : 1, de telle sorte que le rapport molaire Ti(III)/Fe(III) dans le mélange soit de 25 : 1 à 1,4 : 1, de préférence de 3,6 : 1 à 1,5 : 1, on ajoute au mélange de l'acide sulfurique à une concentration en $H_2SO_4$ supérieure à 86 % pour ajuster le rapport $H_2SO_4/TiO_2$ de 1,7 : 1 à 2,2 : 1 et on démarre la réaction d'attaque par addition d'assez d'eau, d'acide sulfurique dilué ou de vapeur d'eau pour que la concentration en $H_2SO_4$ soit ensuite comprise entre 86 et 96 %.

2. Procédé selon la revendication 1, caractérisé en ce que l'on mélange d'abord la scorie avec l'oléum ou l'acide dilué préconcentré et on ajoute ensuite un mélange de l'ilménite dans l'acide dilué préconcentré ou l'oléum, respectivement.

3. Procédé selon l'une des revendications 1 ou 2, caractérisé en ce que l'on broie ensemble la scorie et l'ilménite et on ajoute l'oléum ou l'acide dilué préconcentré, puis on démarre la réaction d'attaque par l'acide dilué préconcentré ou l'oléum, respectivement.

4. Procédé selon l'une des revendications 2 ou 3, caractérisé en ce que l'on utilise un oléum ayant une teneur en $SO_3$ allant jusqu'à 30 % et un acide dilué préconcentré recyclé ayant une concentration en $H_2SO_4$ de 60 à 75 %, de préférence de 63 à 71 %.